# EUROPÄISCHE PATENTSCHRIFT

(11) **EP 1 334 850 B1**
(45) Veröffentlichungstag und Bekanntmachung des Hinweises auf die Patenterteilung: **06.12.2006**
(21) Anmeldenummer: 03001567.1
(22) Anmeldetag: 23.01.2003
(51) Int. Cl.: B60H 1/00

(54) **Luftverteilungsvorrichtung für eine Fahrzeugklimatisierungseinrichtung**
Air flow swiching system for a vehicular air conditioning system
Système de répartition d'air pour climatisation de véhicule

(30) Priorität: 06.02.2002 DE 10204813
(43) Veröffentlichungstag der Anmeldung: 13.08.2003
(73) Patentinhaber: Behr GmbH & Co. KG, 70469 Stuttgart (DE)
(72) Erfinder: Voigt, Klaus, 74321 Bietigheim-Bissingen (DE)
(74) Vertreter: Grauel, Andreas

(56) Entgegenhaltungen:
- EP-A- 0 681 934
- EP-A- 0 691 228
- DE-A- 4 447 135
- FR-A- 2 761 014
- GB-A- 2 308 439

## Beschreibung

Die Erfindung betrifft eine Luftverteilvorrichtung für eine Klimatisierungseinrichtung eines Fahrzeugs, insbesondere eines Kraftfahrzeugs.

Aus der EP 0 691 228 A1, der DE 196 03 126 A1, der EP 0 681 934 A1 und der EP 0 773 121 A2 sind Luftverteilvorrichtungen für eine Klimatisierungseinrichtung eines Fahrzeugs bekannt, bei denen jeweils ein zylinderförmiges oder zylindersegmentförmiges Verteilerorgan vorgesehen ist, das radiale Öffnungen aufweist. An dieses Verteilerorgan grenzen ein Zuströmraum und mehrere Abströmräume radial an. Eine über den Zuströmraum zugeführte Luftströmung kann nun in Abhängigkeit der Drehlage des Verteilerorgans auf die Abströmräume verteilt werden. Eine derartige Bauweise benötigt radial zum Verteilerorgan relativ viel Bauraum.

Aus der DE 198 04 115 A1 ist eine weitere Luftverteilvorrichtung für eine Klimatisierungseinrichtung eines Fahrzeugs bekannt, bei der ein drehbar gelagertes Verteilerorgan axial zwischen einem axial an das Verteilerorgan angrenzenden Zuströmraum und mehreren, dem Zuströmraum gegenüberliegend angeordneten, axial an das Verteilerorgan angrenzenden Abströmräumen angeordnet ist. Das Verteilerorgan besitzt eine axiale Eintrittsöffnung, die unabhängig von der Drehlage des Verteilerorgans stets mit dem axialen Zuströmraum kommuniziert. Des weiteren besitzt das Verteilerorgan eine axiale Austrittsöffnung, die mit der Eintrittsöffnung kommuniziert und die in Abhängigkeit der Drehlage des Verteilerorgans mit einem oder mit mehreren Abströmräumen mehr oder weniger kommuniziert. Diese Bauweise benötigt in axialer Richtung des Verteilerorgans einen relativ großen Bauraum.

Die DE 44 47 135 A1 offenbart eine Luftverteilvorrichtung nach dem Oberbegriff des Anspruchs 1.

Die vorliegende Erfindung beschäftigt sich mit dem Problem, für eine Luftverteilvorrichtung der eingangs genannten Art eine verbesserte Ausführungsform anzugeben, die insbesondere einen kompakten Aufbau besitzt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bezüglich einer Drehachse eines Verteilerorgans einen Zuströmraum und mehrere Abströmräume so anzuordnen, daß der Zuströmraum axial und die Abströmräume radial an das Verteilerorgan angrenzen, wobei das Verteilerorgan eine permanent mit dem axialen Zuströmraum kommunizierende Eintrittsöffnung und mehrere mit der Eintrittsöffnung kommunizierende Austrittsöffnungen aufweist, die in Abhängigkeit der Drehlage des Verteilerorgans mit einem oder mit mehreren Austrittsräumen mehr oder weniger kommunizieren. Durch die Ausbildung eines axialen Zuströmraums und radialer Abströmräume kann für die Luftverteilvorrichtung eine besonders kompakte Bauweise erzielt werden, die für bestimmte Anwendungsformen vorteilhaft ist. Die kompakte Bauweise wird außerdem durch die in axialer Richtung versetzt angeordneten Abströmräume sowie Austrittsöffnungen unterstützt, wobei sich gleichzeitig vielfältige Steuerungsmöglichkeiten für die Luftverteilung auf die einzelnen Abströmräume ergeben. Darüber hinaus ist von besonderer Bedeutung, daß bei einer entsprechenden Gestaltung des Verteilerorgans der Querschnitt der axialen Eintrittsöffnung beim Drehen des Verteilerorgans konstant bleibt, so daß an der Eintrittsöffnung stets gleichbleibende Strömungsverhältnisse herrschen.

Bei einer bevorzugten Ausführungsform kann das Verteilerorgan als einteiliger, topfförmiger Schalenkörper ausgebildet sein. Hierdurch wird eine gewichtssparende Leichtbauweise erreicht, wobei das Verteilerorgan außerdem besonders preiswert, z.B. als Blasformteil, Tiefziehteil oder Spritzgußteil, herstellbar ist. Unter einem "Schalenkörper" wird im vorliegenden Zusammenhang ein relativ dünnwandiger Körper verstanden.

Bei einer alternativen Ausführungsform kann das Verteilerorgan als zweiteiliger Schalenkörper ausgebildet sein, bei dem eine selbsttragende, topfförmige Innenschale radial außen eine hülsenförmige Außenschale aus Schaumstoff trägt, wobei die Austrittsöffnungen des Verteilerorgans an beiden Schalen ausgebildet sind. Beispielsweise kann hier die Innenschale preiswert als Blasformteil, Tiefziehteil oder Spritzgußteil hergestellt werden. Die als Schaumteil ausgebildete Außenschale dient einerseits zur Schalldämpfung und kann andererseits eine Dichtfunktion übernehmen, um Fehlströmungen zu verhindern.

Bei einer weiteren alternativen Ausführungsform kann das Verteilerorgan einen selbsttragenden Käfig aufweisen, der radial luftdurchlässig ausgebildet ist und radial außen eine hülsenförmige Außenschale trägt, an der dann die Austrittsöffnungen des Verteilerorgans ausgebildet sind. Auch hier kann der Käfig beispielsweise als preiswertes Spritzgußteil hergestellt werden. Die Außenschale kann z.B. aus einem besonders dünnwandigen Material hergestellt werden, beispielsweise aus einer Folie oder aus einem Schrumpfschlauch. Ebenso ist es möglich, die Außenschale als Blasformteil auszubilden.

Bei den vorgenannten zweiteiligen Ausführungsformen des Verteilerorgans kann den verschiedenen Komponenten jeweils ein geeignetes Herstellungsverfahren sowie ein geeignetes Material zugeordnet werden, so daß der jeweilige Bestandteil die ihm zugeordnete Funktion optimal erfüllen kann. Beispielsweise können die selbsttragende Innenschale bzw. der selbsttragende Käfig mittels eines entsprechenden Kunststoffs besonders formstabil und mit relativ geringer Formtoleranz hergestellt werden. Im Unterschied dazu können die Außenschalen z.B. Dichtungsfunktionen übernehmen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- **Fig. 1**: eine perspektivische Ansicht auf eine teilweise geschnittene Luftverteilvorrichtung nach der Erfindung,
- **Fig. 2**: eine perspektivische Explosionsdarstellung eines Verteilerorgans bei einer ersten Ausführungsform,
- **Fig. 3**: eine Darstellung wie in Fig. 2, jedoch bei einer zweiten Ausführungsform,
- **Fig. 4**: eine Darstellung wie in Fig. 2, jedoch bei einer dritten Ausführungsform,
- **Fig. 5**: eine perspektivische Ansicht auf ein Verteilerorgan bei einer vierten Ausführungsform.

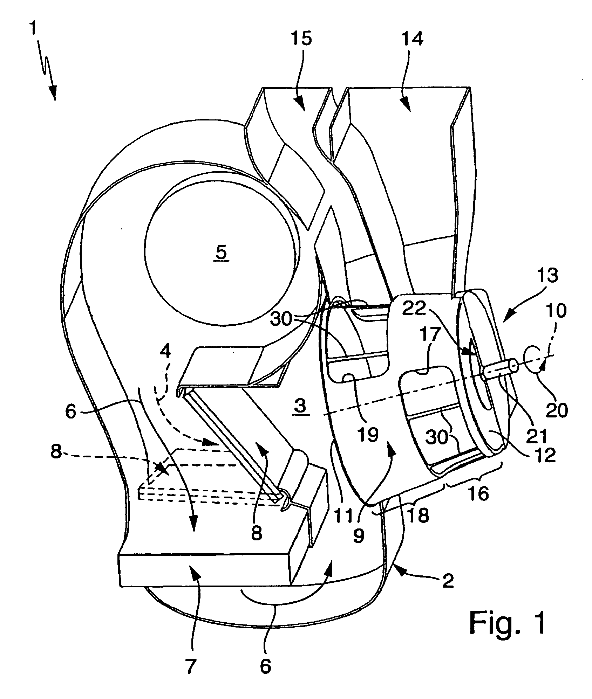

Entsprechend Fig. 1 umfaßt eine erfindungsgemäße Luftverteilvorrichtung 1 ein Gehäuse 2, das einen Zuströmraum 3 enthält. Dieser Zuströmraum 3 kommuniziert über einen ersten Strömungspfad oder -weg 4, der in Fig. 1 mit einem unterbrochenem Strömungspfeil symbolisiert ist, mit einer Zuströmöffnung 5 des Gehäuses 2. Stromauf dieser Zuströmöffnung 5 kann beispielsweise ein hier nicht dargestelltes Gebläse angeordnet sein. Der Zuströmraum 3 kommuniziert außerdem über einen zweiten Strömungsweg oder -pfad 6, der hier mit durchgehenden Strömungspfeilen 6 symbolisiert ist, ebenfalls mit der Zuströmöffnung 5. Im Gehäuse 2 ist im zweiten Strömungsweg 6 ein durchströmbarer Heizkörper 7 angeordnet, der bei seiner Durchströmung auf die ihn durchströmende Luft Wärme überträgt. Dementsprechend handelt es sich bei der dem zweiten Strömungsweg 6 folgenden Luftströmung um einen Warmluftstrom. Im Unterschied dazu umgeht der erste Strömungspfad 4 den Heizkörper 7, so daß es sich bei der dem ersten Strömungspfad 4 folgenden Luftströmungen um einen Kaltluftstrom handelt.

Im Gehäuse 2 ist außerdem ein Steuerorgan 8 angeordnet, das zwischen zwei Endstellungen verstellbar gelagert ist. In der in Fig. 1 mit durchgezogenen Linien dargestellten ersten Endstellung ist der erste Strömungspfad 4 gesperrt, so daß die Luftströmung ausschließlich über den zweiten Strömungspfad 6 in den Zuströmraum 3 gelangen kann, d.h., der Zuströmraum 3 wird ausschließlich mit Warmluft versorgt. In der in Fig. 1 mit unterbrochenen Linien dargestellten zweiten Endstellung des Steuerorgans 8 ist der zweite Strömungspfad 6 gesperrt, so daß der Zuströmraum 3 ausschließlich über den ersten Strömungspfad 4, also mit Kaltluft versorgt wird. Es ist klar, daß auch beliebige Zwischenstellungen einstellbar sind, so daß im Zuströmraum 3 in Abhängigkeit der Position des Steuerorgans 8 nahezu beliebige Mischungsverhältnisse zwischen Warmluft und Kaltluft einstellbar sind. Da sich die eingestellten Warmluftströme und Kaltluftströme im Zuströmraum 3 durchmischen, kann der Zuströmraum 3 auch als Mischraum bezeichnet werden.

Im Gehäuse 2 ist ein Verteilerorgan 9 um eine Drehachse 10 drehbar gelagert. Das Verteilerorgan 9 ist hier als kegelstumpfförmiger und topfförmiger, o dünnwandiger Schalkörper ausgebildet, dessen Längsmittelachse mit der Drehachse 10 zusammenfällt. Das Verteilerorgan 9 besitzt eine dem Zuströmraum 3 zugewandte offene axiale Seite, die eine axiale Eintrittsöffnung 11 des Verteilerorgans 9 bildet. An seiner vom Zuströmraum 3 abgewandten axialen Seite ist das Verteilerorgan 9 geschlossen und besitzt dort einen Boden 12.

Das Verteilerorgan 9 ist im Gehäuse 2 so angeordnet und gelagert, daß der Zuströmraum 3 im Bereich der axialen Eintrittsöffnung 11 axial an das Verteilerorgan 9 angrenzt. Auf diese Weise ist gewährleistet, daß die Eintrittsöffnung 11 in beliebiger Drehlage des Verteilerorgans 9 über den selben Querschnitt mit dem Zuströmraum 3 kommuniziert. Das Gehäuse 2 enthält außerdem einen in Fig. 1 im wesentlichen verdeckten ersten Abströmraum 13, der z.B. durch einen zu einem Fußraum eines Fahrzeugs führenden Luftführungskanal gebildet ist. Des weiteren ist ein zweiter Abströmraum 14 vorgesehen, der beispielsweise durch einen weiteren Luftführungskanal gebildet ist, der zu einer oder zu mehreren Luftaustrittsdüsen führt, die auf einen Sitzplatz im Fahrzeug ausgerichtet oder ausrichtbar sind, z.B. Mitteldüsen und/oder Seitendüsen. Des weiteren enthält das Gehäuse 2 hier einen dritten Abströmraum 15, der z.B. durch einen zu einer Windschutzscheibe des Fahrzeugs führenden Luftführungskanal gebildet ist und beispielsweise zur Enteisung oder gegen Beschlagbildung verwendet wird. Darüber hinaus kann ein weiterer, hier nicht dargestellter vierter Abströmraum vorgesehen sein, der dem ersten Abströmraum 13 gegenüberliegend, auf der dem Betrachter zugewandten Seite angeordnet ist und beispielsweise ebenfalls durch einen zum Fußraum führenden Luftführungskanal gebildet ist. Von besonderer Bedeutung ist hierbei, daß sämtliche Abströmräume 13,14,15 bezüglich der Drehachse 10 radial an das Verteilerorgan 9 angrenzen. Hierdurch kann eine besonders kompakte Bauweise erzielt werden.

Erfindungsgemäß ist das Verteilerorgan 9 in einem durch eine geschweifte Klammer gekennzeichneten ersten Axialabschnitt 16 mit einer ersten radialen Austrittsöffnung 17 ausgestattet, die sich im wesentlichen über die gesamte axiale Länge des ersten Axialabschnitts 16 sowie in Umfangsrichtung über eine bestimmte Bogenlänge erstreckt. Die Anordnung des ersten Abströmraums 13 und des zweiten Abströmraums 14 erfolgt dabei so, daß diese im ersten Axialabschnitt 16 des Verteilerorgans 9 an das Verteilerorgan 9 angrenzen. Dies hat zur Folge, daß die erste Austrittsöffnung 17 dem ersten Abströmraum 13 und dem zweiten Abströmraum 14 zugeordnet ist.

In entsprechender Weise ist in einem zweiten Axialabschnitt 18 des Verteilerorgans 9 eine zweite radiale Austrittsöffnung 19 ausgebildet, die sich ebenfalls über die gesamte axiale Länge des zweiten Axialabschnitts 18 sowie in Umfangsrichtung über eine vorbestimmte Bogenlänge erstreckt. Der zweite Axialabschnitt 18 grenzt in Axialrichtung an den ersten Axialabschnitt 16 an, so daß sich in entsprechender Weise zwischen den beiden Austrittsöffnungen 17 und 19 ein axialer Versatz ergibt. Des weiteren können die beiden Austrittsöffnungen 17 und 19 auch in Umfangsrichtung versetzt zueinander angeordnet sein. Bei der hier gezeigten Ausführungsform sind die beiden Austrittsöffnungen 17 und 19 in Umfangsrichtung so weit gegeneinander versetzt, daß die eine Austrittsöffnung dort beginnt, wo die andere endet. Der dritte Abströmraum 15 und - soweit vorhanden - der nicht gezeigte vierte Abströmraum sind so positioniert, daß sie im zweiten Axialabschnitt 18 an das Verteilerorgan 9 angrenzen, mit der Folge, daß die zweite Austrittsöffnung 19 dem dritten Abströmraum 15 und dem vierten Abströmraum zugeordnet ist.

In Abhängigkeit der Drehlage des Verteilerorgans 9 kann nun die erste Austrittsöffnung 17 mehr oder weniger oder gar nicht mit dem ersten Abströmraum 13 bzw. mit dem zweiten Abströmraum 14 kommunizierend verbunden werden. In entsprechender Weise kann in Abhängigkeit der Drehlage des Verteilerorgans 9 auch der zweite Axialabschnitt 19 mehr oder weniger oder gar nicht mit dem dritten Abströmraum 15 bzw. mit dem vierten Abströmraum kommunizieren. Da die Austrittsöffnungen 17 und 19 durch das Innere des Verteilerorgans 9 mit der Eintrittsöffnung 11 des Verteilerorgans 9 kommunizieren, kann in Abhängigkeit der Drehlage des Verteilerorgans 9 die dem Zuströmraum 3 zugeführte Luftströmung auf die drei bzw. vier Abströmräume 13 bis 15 verteilt werden.

Bei der hier gezeigten bevorzugten Ausführungsform sind die beiden Austrittsöffnungen 17 und 19 in Umfangsrichtung etwa um 120° zueinander versetzt angeordnet, wobei sich beide Austrittsöffnungen 17 und 19 außerdem selbst in Umfangsrichtung etwa über 120° erstrecken. Zweckmäßig sind der erste Abströmraum 13 und der zweite Abströmraum 14 in Umfangsrichtung etwa um 120° zueinander versetzt angeordnet. Des weiteren sind hier der zweite Abströmraum 14 und der dritte Abströmraum 15 in Umfangsrichtung nicht zueinander versetzt. Sofern der vierte Abströmraum vorhanden ist, ist dieser zweckmäßig gegenüber dem ersten Abströmraum 13 und dem dritten Abströmraum 15 um etwa 120° versetzt angeordnet. Bei diesem Aufbau ergibt sich für die Austrittsöffnungen 17,19 und die drei bzw. vier Abströmräume 13,14,15 in Umfangsrichtung eine Verteilung, bei der für das Verteilerorgan 9 die in Fig. 1 dargestellte Drehstellung einstellbar ist, bei der das Verteilerorgan 9 den Zuströmraum 3 ausschließlich mit dem dritten Abströmraum 15 verbindet. In dieser Drehlage des Verteilerorgans 9 deckt sich die zweite Austrittsöffnung 19 mit der Mündung des dritten Abströmraums 15.

Wenn das Verteilerorgan 9 entsprechend dem in Fig. 1 gezeigten Pfeil 20 gedreht wird, verkleinert sich einerseits die Überdeckung der zweiten Austrittsöffnung 19 mit der Mündung des dritten Abströmraums 15, während andererseits eine zunehmende Überdeckung der ersten Austrittsöffnung 17 mit der Mündung des ersten Abströmraums 13 und - soweit vorhanden - der zweiten Austrittsöffnung 19 mit der Mündung des vierten Abströmraums stattfindet. Demnach verbindet das Verteilerorgan 9 in diesem Verstellbereich dann den Zuströmraum 3 mehr oder weniger mit dem ersten Abströmraum 13 und mit dem dritten Abströmraum 15 und gegebenenfalls mit dem vierten Abströmraum.

Bei einer weitergehenden Drehverstellung des Verteilerorgans 9 ergibt sich für die Austrittsöffnungen 17 und 19 eine Relativlage, bei welcher die erste Austrittsöffnung 17 ausschließlich mit der Mündung des ersten Abströmraums 13 fluchtet und bei der ggf. die zweite Austrittsöffnung 19 ausschließlich mit der Mündung des vierten Abströmraums fluchtet bzw. kommuniziert. In dieser Stellung verbindet das Verteilerorgan 9 den Zuströmraum 3 ausschließlich mit dem ersten Abströmraum 13 und - soweit vorhanden - mit dem vierten Abströmraum. Zweckmäßig sind der erste Abströmraum 13 und der vierte Abströmraum außerhalb des Verteilerorgans 9 miteinander kommunizierend verbunden.

Wenn das Verteilerorgan 9 entsprechend dem Pfeil 20 weitergedreht wird, ergibt sich im folgenden eine abnehmende Überdeckung der ersten Austrittsöffnung 17 mit der Mündung des ersten Abströmraums 13 und gegebenenfalls der zweiten Austrittsöffnung 19 mit der Mündung des vierten Abströmraums. Andererseits nimmt die Überdeckung der ersten Austrittsöffnung 19 mit der Mündung des zweiten Abströmraums 14 mehr und mehr zu Dementsprechend kann das Verteilerorgan 9 in diesem Drehlagenbereich den Zuströmraum 3 mehr oder weniger sowohl mit dem zweiten Abströmraum 14 als auch mit dem ersten Abströmraum 13 und gegebenenfalls mit dem vierten Abströmraum verbinden.

Bei einer weitergehenden Drehverstellung des Verteilerorgans 9 ergibt sich für die Austrittsöffnungen 17 und 19 eine Relativlage, bei der die zweite Austrittsöffnung 19 weder mit der Mündung des dritten Abströmkanals 15 noch mit der Mündung des gegebenenfalls vorhandenen vierten Abströmkanals fluchtet, während die erste Austrittsöffnung 17 ausschließlich mit der Mündung des zweiten Abströmkanals 14 kommuniziert. Demzufolge verbindet das Verteilerorgan 9 in dieser Relativlage den Zuströmraum 3 ausschließlich mit dem zweiten Abströmraum 14.

Wenn das Verteilerorgan 9 entsprechend dem Pfeil 20 weitergedreht wird, nimmt die Überdeckung der ersten Austrittsöffnung 17 mit der Mündung des zweiten Abströmraums 14 allmählich wieder ab, während in entsprechender Weise eine Überdeckung der zweiten Ausströmöffnung 19 mit der Mündung des dritten Abströmraums 15 mehr und mehr zunimmt. Dementsprechend verbindet das Verteilerorgan 9 in diesem Verstellbereich den Zuströmraum 3 mehr oder weniger sowohl mit dem zweiten Abströmraum 14 als auch mit dem dritten Abströmraum 15.

Bei einer weitergehenden Drehverstellung des Verteilerorgans 9 wird wieder die in Fig. 1 dargestellte Ausgangsstellung erreicht.

Um das Verteilerorgan 9 drehend antreiben zu können, ist dieses z.B. an seinem Boden 12 mit einer Antriebswelle 21 drehfest verbunden, die mit einem hier nicht gezeigten Aktuator gekoppelt ist, der ein manuelles oder motorisches Verdrehen der Antriebswelle 21 und somit des damit drehfest verbundenen Verteilerorgans 9 ermöglicht. Die Antriebswelle 21 erstreckt sich koaxial zur Drehachse 10 des Verteilerorgans 9.

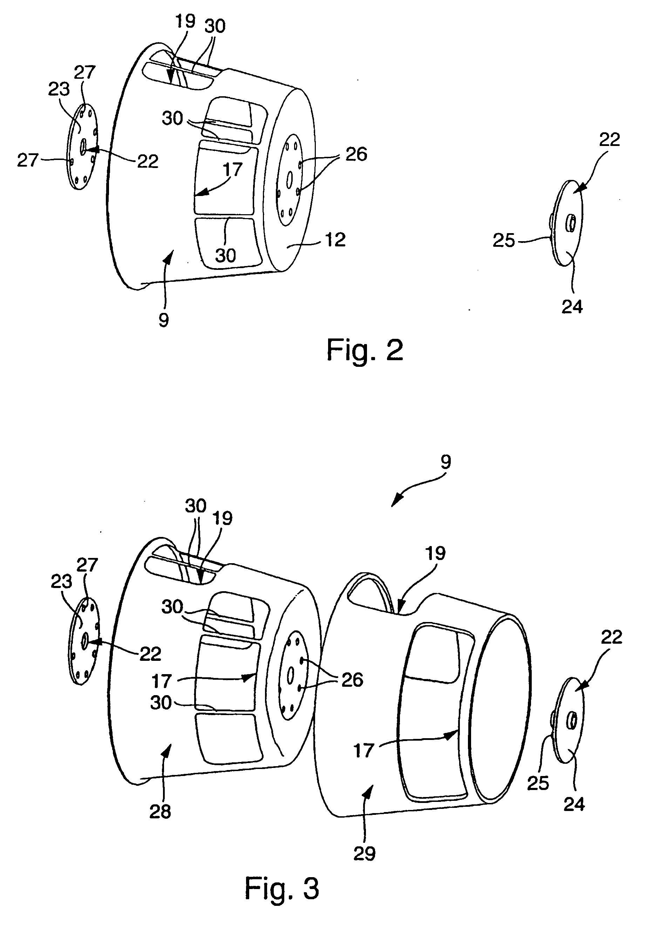

Entsprechend Fig. 2 kann das Verteilerorgan 9 bei einer besonders einfachen Ausführungsform als einteiliger, topfförmiger Schalenkörper ausgebildet sein, der beispielsweise als Tiefziehteil, Spritzgußteil oder Blasformteil ausgebildet ist. Zur Herstellung wird dabei vorzugsweise ein Kunststoff verwendet, der dem Verteilerorgan 9 hinreichend Festigkeit für eine selbsttragende Struktur gibt. Im Bereich der Austrittsöffnungen 17 und 19 können dabei mehrere, die jeweiligen Austrittsöffnungen 17,19 in axialer Richtung durchsetzende Stege 30 vorgesehen sein, durch die die Stabilität des Verteilerorgans 9 erhöht ist.

Die in Fig. 2 nicht gezeigte Antriebswelle 21 ist über einen Mitnehmer 22 drehfest an das Verteilerorgan 9 anschließbar. Dieser Mitnehmer 22 besteht hier aus zwei Mitnehmerteilen 23 und 24, die komplementär zueinander ausgebildet und miteinander verclipsbar sind. Die drehfeste Kopplung des Mitnehmers 22 mit dem Verteilerorgan 9 erfolgt dabei so, daß der Boden 12 des Verteilerorgans 9 beim Verclipsen der beiden Mitnehmerteile 23,24 axial zwischen diesen beiden Mitnehmerteilen 23 und 24 eingeklemmt und dadurch fixiert wird. Bei der hier gezeigten Ausführungsform durchdringen Vorsprünge 25 des einen Mitnehmerteils 24 entsprechende Öffnungen 26 des Bodens 12 und dringen in entsprechende Öffnungen 27 im anderen Mitnehmerteil 23 ein. Hierdurch ergibt sich eine formschlüssige Drehsicherung zwischen Mitnehmer 22 und Verteilerorgan 9. Ebenso ist es möglich, die Antriebswelle 21 an das Verteilerorgan 9 anzuspritzen bzw. Verteilerorgan 9 und Antriebswelle 21 einstückig herzustellen.

Entsprechend Fig. 3 kann bei einer zweiten Ausführungsform das Verteilerorgan 9 eine selbsttragende, topfförmige Innenschale 28 aufweisen, auf die radial außen eine hülsenförmige Außenschale 29 aufgesetzt ist. Die Innenschale kann dabei grundsätzlich auf dieselbe Weise hergestellt werden wie das Verstellorgan 9 gemäß Fig. 2. Die Außenschale 29 kann bei dieser mehrteiligen Bauweise besonders einfach aus einem Schaumstoff hergestellt werden, der beispielsweise eine schalldämpfende Wirkung entfaltet. Des weiteren kann die als Schaumstoffteil ausgebildete Außenschale 29 gleichzeitig Dichtfunktionen wahrnehmen, beispielsweise um Fehlströmungen zwischen den einzelnen Abströmräumen 13,14,15 über die Außenseite des Verteilerorgans 9 zu verhindern. Die Außenschale 29 kann beispielsweise auf die Innenschale 28 aufgeklebt oder aufgeschrumpft sein. Von besonderer Bedeutung ist bei dieser Ausführungsform, daß sowohl die Außenschale 29 als auch die Innenschale 28 mit den Austrittsöffnungen 17 und 19 des Verteilerorgans 9 ausgestattet sind.

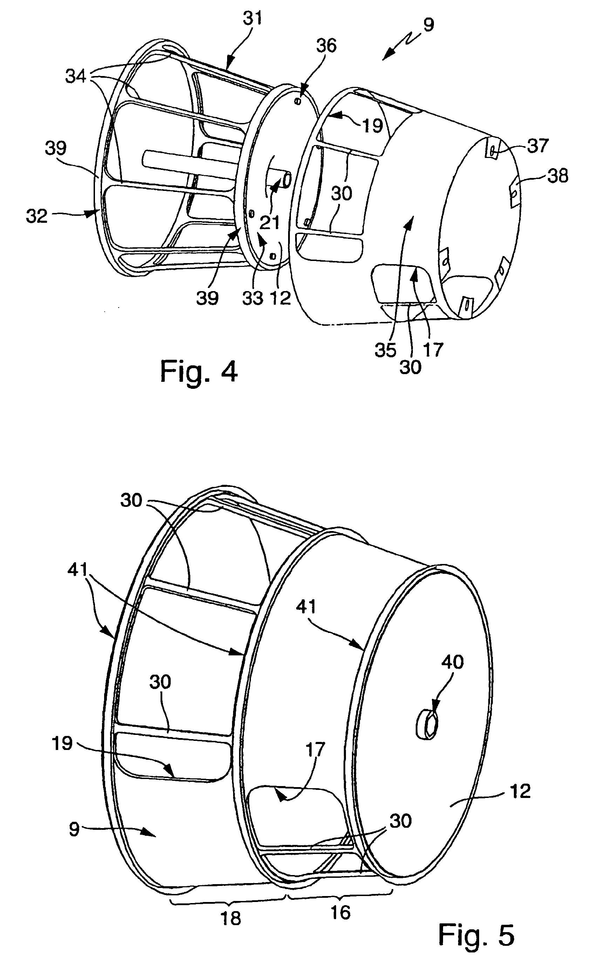

Bei einer dritten Ausführungsform kann entsprechend Fig. 4 das Verteilerorgan 9 einen selbsttragenden Käfig 31 aufweisen, der im wesentlichen aus einem Ring 32, einer Scheibe 33 und mehreren, die Ringe 32 und die Scheibe 33 miteinander verbindenden Streben 34 besteht. Dieser Käfig 31 ist beispielsweise als Spritzgußteil ausgebildet und besitzt eine relativ hohe Stabilität. Beispielsweise kann in die Scheibe 33, welche den Boden 12 des Verteilerorgans 9 bildet, die Antriebswelle 21 einstückig integriert sein. Der Käfig 31 ist in radialer Richtung luftdurchlässig ausgebildet. Auf den Käfig 31 ist eine hülsenförmige Außenschale 35 aufgesetzt, die die Austrittsöffnungen 17 und 19 enthält. Diese Außenschale 35 kann besonders dünnwandig ausgebildet sein und insbesondere aus einer Folie oder aus einem Schrumpfschlauch bestehen. Die Fixierung der Außenschale 35 am Käfig 31 erfolgt beispielsweise über Vorsprünge 36, die vom Boden 12 axial abstehen und Öffnungen 37 durchdringen, die an radial nach innen abstehenden Laschen 38 der Außenschale 35 ausgebildet sind. Der Käfig 31 kann am Außenrand des Rings 32 und am Außenrand der Scheibe 33 jeweils einen umlaufenden elastischen Ring 39, z.B. aus Schaumstoff, aufweisen, der eine Fixierung der aufgeschobenen Außenschale 35 bewirkt und an dieser radial außen eine Dichtkontur erzeugt.

Bei einer vierten Ausführungsform kann entsprechend Fig. 5 das Verteilerorgan 9 wieder durch einen relativ dünnwandigen, einteiligen, topfförmigen Schalenkörper gebildet sein, in den ein Mitnehmer 40 im Bereich des Bodens 12 bereits integriert ist. Dieser Mitnehmer 40 ist, z.B. durch einen Innenmehrkant, drehfest mit der Antriebswelle 21 verbindbar. Bei der hier gezeigten Ausführungsform sind radial außen drei, jeweils in Umfangsrichtung geschlossen ringförmig umlaufende Dichtlippen 41 am Verteilerorgan 9 angebracht, z.B. angeformt oder angespritzt. Diese Dichtlippen 41 definieren hierbei die beiden Axialabschnitte 16 und 18 des Verteilerorgans 9. Es ist klar, daß am Gehäuse 2 entsprechende Widerlagerflächen ausgebildet sind, mit denen die Dichtlippen 41 zur Erzeugung einer radialen Dichtwirkung zusammenwirken können.

### Bezugszeichenliste

- 1: Luftverteilvorrichtung
- 2: Gehäuse
- 3: Zuströmraum
- 4: erster Strömungsweg/-pfad
- 5: Zuströmöffnung
- 6: zweiter Strömungspfad/-weg
- 7: Heizkörper
- 8: Steuerorgan
- 9: Verteilerorgan
- 10: Drehachse/Längsmittelachse von 9
- 11: Eintrittsöffnung
- 12: Boden von 9
- 13: erster Abströmraum
- 14: zweiter Abströmraum
- 15: dritter Abströmraum
- 16: erster Axialabschnitt
- 17: erste Austrittsöffnung
- 18: zweiter Axialabschnitt
- 19: zweite Austrittsöffnung
- 20: Drehrichtungspfeil
- 21: Antriebswelle
- 22: Mitnehmer
- 23: Mitnehmerteil
- 24: Mitnehmerteil
- 25: Vorsprung an 24
- 26: Öffnung in 12
- 27: Öffnung in 23
- 28: Innenschale
- 29: Außenschale
- 30: Steg
- 31: Käfig
- 32: Ring
- 33: Scheibe
- 34: Strebe
- 35: Außenschale
- 36: Vorsprung
- 37: Öffnung
- 38: Lasche
- 39: elastischer Ring
- 40: Mitnehmer
- 41: Dichtlippe

## Patentansprüche

1. Luftverteilvorrichtung für eine Klimatisierungseinrichtung eines Fahrzeugs, insbesondere eines Kraftfahrzeugs, mit einem im wesentlichen zylinderförmigen oder kegelstumpfförmigen Verteilerorgan (9),
- das um eine Drehachse (10) drehverstellbar gelagert ist, die koaxial zur Längsmittelachse des Verteilerorgans (9) verläuft,
- das eine axiale Eintrittsöffnung (11) aufweist, die unabhängig von der Drehlage des Verteilerorgans (9) stets mit einem axial an das Verteilerorgan (9) angrenzenden Zuströmraum (3) kommuniziert,
- das eine erste radiale Austrittsöffnung (17) aufweist, die sich in einem ersten Axialabschnitt (16) des Vorteilerorgans (9) in Umfangsrichtung erstreckt, mit der Eintrittsöffnung (11) kommuniziert und in Abhängigkeit von der Drehlage des Verteilerorgans (9) mehr oder weniger oder nicht mit einem im ersten Axialabschnitt (16) radial an das Verteilerorgan (9) angrenzenden ersten Abströmraum (13) kommuniziert,
- das eine zweite radiale Austrittsöffnung (19) aufweist, die sich in einem axial versetzt zum ersten Axialabschnitt (16) angeordneten zweiten Axialabschnitt (18) des Verteilerorgans (9) in Umfangsrichtung erstreckt, mit der Eintrittsöffnung (11) kommuniziert und in Abhängigkeit von der Drehlage des Verteilerorgans (9) mehr oder weniger oder nicht mit einem im zweiten Axialabschnitt (18) radial an das Verteilerorgan (9) angrenzenden dritten Abströmraum (15) kommuniziert,
**dadurch gekennzeichnet,**
**daß** die erste radiale Austrittsöffnung (17) in Abhängigkeit von der Drehlage des Verteilerorgans (9) außerdem mehr oder weniger oder nicht mit einem im ersten Axialabschnitt (16) radial an des Verteilerorgan (9) angrenzenden, in Umfangsrichtung versetzt zum ersten Abströmraum (17) angeordneten zweiten Abströmraum (19) kommuniziert; und
**daß** die beiden Austrittsöffnungen (17,19) und die drei Abströmräume (13,14,15) in Umfangsrichtung des Verteilerorgans (9) so verteilt angeordnet sind, daß das Verteilerorgan (9) den Zuströmraum (3)
- in einer ersten Drehstellung ausschließlich mit dem ersten Abströmraum (13) verbindet,
- in einer zweiten Drehstellung ausschließlich mit dem zweiten Abströmraum (14) verbindet,
- in einer dritten Drehstellung ausschließlich mit dem dritten Abströmraum (15) verbindet,
- in einem ersten Mischstellungsbereich sowohl mit dem ersten Abströmraum (13) als auch mit dem zweiten Abströmraum (14) mehr oder weniger verbindet,
- in einem zweiten Mischstellungsbereich sowohl mit dem ersten Abströmraum (13) als auch mit dem dritten Abströmraum (15) mehr oder weniger verbindet,
- in einem dritten Mischstellungsbereich sowohl mit dem zweiten Abströmraum (14) als auch mit dem dritten Abströmraum (15) mehr oder weniger verbindet.

2. Luftverteilvorrichtung nach Anspruch 1,
**dadurch gekennzeichnet,**
**daß** die zweite radiale Austrittsöffnung (19) in Abhängigkeit von der Drehlage des Verteilerorgans (9) außerdem mehr oder weniger oder nicht mit einem im zweiten Axialabschnitt (18) radial an das Verteilerorgan (9) angrenzenden, in Umfangsrichtung versetzt zum dritten Abströmraum (15) angeordneten vierten Abströmraum kommuniziert.

3. Luftverteilvorrichtung nach Anspruch 2,
**dadurch gekennzeichnet,**
**daß** die beiden Austrittsöffnungen (17,19) und die vier Abströmräume (13,14,15) in Umfangsrichtung des Verteilerorgans (9) so verteilt angeordnet sind, daß das Verteilerorgan (9) den Zuströmraum (3)
- in einer ersten Drehstellung ausschließlich mit dem ersten Abströmraum (13) und dem vierten Abströmraum verbindet,
- in einer zweiten Drehstellung ausschließlich mit dem zweiten Abströmraum (14) verbindet,
- in einer dritten Drehstellung ausschließlich mit dem dritten Abströmraum (15) verbindet,
- in einem ersten Mischstellungsbereich sowohl mit dem ersten Abströmraum (13) als auch mit dem zweiten Abströmraum (14) und mit dem vierten Abströmraum mehr oder weniger verbindet,
- in einem zweiten Mischstellungsbereich sowohl mit dem ersten Abströmraum (13) als auch mit dem dritten Abströmraum (15) und dem vierten Abströmraum mehr oder weniger verbindet,
- in einem dritten Mischstellungsbereich sowohl mit dem zweiten Abströmraum (14) als auch mit dem dritten Abströmraum (15) mehr oder weniger verbindet.

4. Luftverteilvorrichtung nach Anspruch 2 oder 3,
**dadurch gekennzeichnet,**
**daß** der erste Abströmraum (13) und der vierte Abströmraum außerhalb des Verteilerorgans (9) miteinander kommunizierend verbunden sind.

5. Luftverteilvorrichtung nach einem der Ansprüche 1 bis 4,
**dadurch gekennzeichnet,**
**daß** das Verteilerorgan (9) als einteiliger, topfförmiger Schalenkörper ausgebildet ist.

6. Luftverteilvorrichtung nach einem der Ansprüche 1 bis 4,
**dadurch gekennzeichnet,**
**daß** das Verteilerorgan (9) eine selbsttragende, topfförmige Innenschale (28) aufweist, die radial außen eine hülsenförmige Außenschale (29) aus Schaumstoff trägt, wobei die Austrittsöffnungen (17,19) des Verteilerorgans (9) an beiden Schalen (28,29) ausgebildet sind.

7. Luftverteilvorrichtung nach einem der Ansprüche 1 bis 4,
**dadurch gekennzeichnet,**
**daß** das Verteilerorgan (9) einen selbsttragenden Käfig (31) aufweist, der radial luftdurchlässig ausgebildet ist und radial außen eine hülsenförmige Außenschale (35) trägt, an der die Austrittsöffnungen (17,19) des Verteilerorgans (9) ausgebildet sind.

8. Luftvertellvorrichtung nach einem der Ansprüche 1 bis 7,
**dadurch gekennzeichnet,**
**daß** das Verteilerorgan (9) radial außen wenigstens eine in Umfangsrichtung geschlossen ringförmig umlaufende Dichtlippe (41) aufweist, die mit einem Gehäuse (2) zusammenwirkt, in dem das Verteilerorgan (9) gelagert ist und das den Zuströmraum (3) und die Abströmräume (13,14,15) enthält.

9. Luftverteilvorrichtung nach einem der Ansprüche 1 bis 8,
**dadurch gekennzeichnet,**
**daß** das Verteilerorgan (9) drehfest mit einer Antriebswelle (21) verbunden ist, die koaxial zur Drehachse (10) des Verteilerorgans (9) in einem Gehäuse (2) drehbar gelagert ist, das den Zuströmraum (3) und die Abströmräume (13,14,15) enthält.

10. Luftvertellvorrichtung nach Anspruch 9,
**dadurch gekennzeichnet,**
**daß** am Verteilerorgan (9) ein Mitnehmer (22);40) drehfest angebracht ist, der drehfest mit der Antriebswelle (21) verbunden ist.

11. Luftverteilvorrichtung nach Anspruch 9 oder 10,
**dadurch gekennzeichnet,**
**daß** das Verteilerorgan (9) topfförmig ausgebildet ist und einen der axialen Eintrittsöffnung (11) gegenüberliegenden Boden (12) aufweist, der drehfest mit der Antriebswelle (21) verbunden ist.

12. Luftverteilvorrichtung nach den Ansprüchen 10 und 11,
**dadurch gekennzeichnet,**
**daß** der Mitnehmer (22) aus zwei miteinander verclipsbaren komplementären Mitnehmerteilen (23,24) besteht, die zur drehfesten Verbindung mit dem Verteilerorgan (9) beim Verclipsen den Boden (12) des Verteilerorgans (9) axial zwischen sich fixieren.

## Claims

1. An air flow switching system in an air conditioning system for a vehicle, in particular a motor vehicle, having an essentially cylindrical or truncated conical switching organ (9),
- which is mounted such that it can be adjusted rotationally about an axis of rotation (10) which runs coaxially to the longitudinal centre axis of the switching organ (9),
- which has an axial inlet opening (11) which communicates constantly with an inflow chamber (3) axially adjacent to the switching organ (9) independently of the rotational position of the switching organ (9),
- which has a first radial outlet opening (17) which extends circumferentially around a first axial section (16) of said switching organ (9), which communicates with the inlet opening (11) and which communicates more or less or not at all with a first outflow chamber (13) radially adjacent to the switching organ (9) in the first axial section (16) dependent on the rotational position of the switching organ (9),
- which has a second radial outlet opening (19) which extends circumferentially around a second axial section (18) of the switching organ (9) positioned axially offset in relation to the first axial section (16), which communicates with the inlet opening (11) and which communicates more or less or not at all with a third outflow chamber (15) radially adjacent to the switching organ (9) in the second axial section (18) dependent on the rotational position of the switching organ (9),
**characterised in that**
the first radial outlet opening (17) also communicates more or less or not at all with a second outflow chamber (14) positioned circumferentially offset in relation to the first outflow chamber (13) radially adjacent to the switching organ (9) in the first axial section (16) dependent on the rotational position of the switching organ (9), and that the two outlet openings (17, 19) and the three outflow chambers (13, 14, 15) are positioned circumferentially around the switching organ (9) in such a manner that:
- in a first rotational position the switching organ (9) connects the inflow chamber (3) to the first outflow chamber (13) only,
- in a second rotational position the switching organ (9) connects the inflow chamber (3) to the second outflow chamber (14) only,
- in a third rotational position the switching organ (9) connects the inflow chamber (3) to the third outflow chamber (15) only,
- in a first mixed position area the switching organ (9) more or less connects the inflow chamber (3) to both the first outflow chamber (13) and to the second outflow chamber (14),
- in a second mixed position area the switching organ (9) more or less connects the inflow chamber (3) to both the first outflow chamber (13) and to the third outflow chamber (15),
- in a third mixed position area the switching organ (9) more or less connects the inflow chamber (3) to both the second outflow chamber (14) and the third outflow chamber (15).

2. An air flow switching system in accordance with claim 1,
**characterised in that**
the second radial outflow opening (19) also communicates more or less or not at all with a fourth outflow chamber positioned circumferentially offset in relation to the third outflow chamber (15) radially adjacent to the switching organ (9) in the second axial section (18) dependent on the rotational position of the switching organ (9).

3. An air flow switching system in accordance with claim 2,
**characterised in that**
the two outlet openings (17, 19) and the four outflow chambers (13, 14, 15) are positioned circumferentially around the switching element (9) in such a manner that:
- in a first rotational position the switching organ (9) connects the inflow chamber (3) to the first outflow chamber (13) only,
- in a second rotational position the switching organ (9) connects the inflow chamber (3) to the second outflow chamber (14) only,
- in a third rotational position the switching organ (9) connects the inflow chamber (3) to the third outflow chamber (15) only,
- in a first mixed position area the switching organ (9) more or less connects the inflow chamber (3) to both the first outflow chamber (13) and to the second outflow chamber (14),
- in a second mixed position area the switching organ (9) more or less connects the inflow chamber (3) to both the first outflow chamber (13) and to the third outflow chamber (15),
- in a third mixed position area the switching organ (9) more or less connects the inflow chamber (3) to both the second outflow chamber (14) and the third outflow chamber (15).

4. An air flow switching system in accordance with claim 2 or 3,
**characterised in that**
the first outflow chamber (13) and the fourth outflow chamber are connected together outside the switching organ (9) in such a manner that they communicate.

5. An air flow switching system in accordance with one of claims 1 to 4,
**characterised in that**
the switching organ (9) is designed as a one-piece, cup-shaped shell body.

6. An air flow switching system in accordance with one of claims 1 to 4,
**characterised in that**
the switching organ (9) has a self-supporting, cup-shaped inner shell (28) which has a radially outer sleeve-shaped outer shell (29) made of a foam material, the outlet openings (17, 19) of the switching organ (9) being formed in both shells (29).

7. An air flow switching system in accordance with one of claims 1 to 4,
**characterised in that**
the switching organ (9) has a self-supporting cage (31) which is designed to be radially air-permeable and has a radially outer sleeve-shaped outer shell (35) in which are formed the outlet openings (17, 19) of the switching organ (9).

8. An air flow switching system in accordance with one of claims 1 to 7,
**characterised in that**
the switching organ (9) has at least one annular, circumferentially closed, radially outer sealing lip (41) which co-operates with a housing (2) in which the switching organ (9) is mounted and which contains the inflow chamber (3) and the outflow chambers (13, 14, 15).

9. An air flow switching system in accordance with one of claims 1 to 8,
**characterised in that**
the switching organ (9) is connected in such a manner that it is unable to rotate to a drive shaft (21) which is mounted coaxial to the axis of rotation (10) of the switching organ (9) in such a manner that it is able to rotate in a housing (2) which contains the inflow chamber (3) and the outflow chambers (13, 14, 15).

10. An air flow switching system in accordance with claim 9,
**characterised in that**
fitted to the switching organ (9) in such a manner that it is unable to rotate is a carrier (22; 40) which is connected to the drive shaft (21) in such a manner that it is unable to rotate.

11. An air flow switching system in accordance with claim 9 or 10,
**characterised in that**
the switching organ (9) is designed in the shape of a cup and has a base (12) opposite the axial inlet opening (11) which is connected to the drive shaft (21) in such a manner that it is unable to rotate.

12. An air flow switching system in accordance with claim 10 or 11,
**characterised in that**
the carrier (22) consists of two complementary carrier parts (23, 24) which are clipped together and which fix together axially to create a non-rotating connection with the switching organ (9) when the base (12) of the switching organ (9) is clipped into place.

## Revendications

1. Système de répartition d'air pour climatisation de véhicule, en particulier d'un véhicule automobile, équipé d'un organe distributeur (9) essentiellement en forme de cylindre ou de cône tronqué,
• qui est logé de manière à pouvoir être réglé par rotation autour d'un axe de rotation (10) coaxial à l'axe médian longitudinal de l'organe distributeur (9),
• qui présente un orifice d'entrée axial (11) qui communique toujours avec un espace d'afflux (3) adjacent de manière axiale à l'organe distributeur (9), indépendamment de la position de rotation de l'organe distributeur,
• qui présente un premier orifice de sortie radial (17) qui s'étend dans une première section axiale (16) de l'organe distributeur (9) dans le sens de la circonférence, communique avec l'orifice d'entrée (11) et, en fonction de la position de rotation de l'organe distributeur (9), communique plus ou moins ou bien ne communique pas avec un premier espace d'évacuation (13) adjacent de manière radiale à l'organe distributeur (9) dans la première section axiale (16),
• qui présente un deuxième orifice de sortie radial (19) qui s'étend dans le sens de la circonférence dans une deuxième section axiale (18) de l'organe distributeur (9) disposée de manière décalée axialement par rapport à la première section axiale (16), communique avec l'orifice d'entrée (11) et, en fonction de la position de rotation de l'organe distributeur (9), communique plus ou moins ou bien ne communique pas avec un troisième espace d'évacuation (15) adjacent de manière radiale à l'organe distributeur (9) dans la deuxième section axiale (18)
**caractérisé en ce que**,
• en outre, en fonction de la position de rotation de l'organe distributeur (9), le premier orifice radial (17) communique plus ou moins ou bien ne communique pas avec un deuxième espace d'évacuation (14) adjacent de manière radiale à l'organe distributeur (9) dans la première section axiale (16), disposé de manière décalée dans le sens de la circonférence par rapport au premier espace d'évacuation (17) ; et
• **en ce que** les deux orifices de sortie (17, 19) et les trois espaces d'évacuation (13, 14, 15) sont disposés dans le sens de la circonférence de l'organe distributeur (9) de manière répartie de telle sorte que l'organe distributeur (9) relie l'espace d'afflux (3)
• exclusivement au premier espace d'évacuation (13) dans une première position de rotation,
• exclusivement au deuxième espace d'évacuation (14) dans une deuxième position de rotation,
• exclusivement au troisième espace d'évacuation (15) dans une troisième position de rotation,
• plus ou moins tant au premier espace d'évacuation (13) qu'au deuxième espace d'évacuation (14) dans une première zone de position mixte,
• plus au moins tant au premier espace d'évacuation (13) qu'au troisième espace d'évacuation (15) dans une deuxième zone de position mixte,
• plus ou moins tant au deuxième espace d'évacuation (14) qu'au troisième espace d'évacuation (15) dans une troisième zone de position mixte.

2. Système de répartition d'air selon la revendication 1, **caractérisé en ce que** le deuxième orifice de sortie radial (19) communique en outre, en fonction de la position de rotation de l'organe distributeur (9), plus ou moins ou bien ne communique pas avec un quatrième espace d'évacuation adjacent de manière radiale à l'organe distributeur (9), disposé décalé dans le sens de la circonférence par rapport au troisième espace d'évacuation (15) dans la deuxième section axiale (18).

3. Système de répartition d'air selon la revendication 2, **caractérisé en ce que** les deux orifices de sortie (17, 19) et les quatre espaces d'évacuation (13, 14, 15) sont disposés dans le sens de la circonférence de l'organe distributeur (9) de manière répartie de telle sorte que l'organe distributeur (9) relie l'espace d'afflux (3)
• exclusivement au premier espace d'évacuation (13) et au quatrième espace d'évacuation dans une première position de rotation,
• exclusivement au deuxième espace d'évacuation (14) dans une deuxième position de rotation,
• exclusivement au troisième espace d'évacuation (15) dans une troisième position de rotation,
• plus ou moins tant au premier espace d'évacuation (13) qu'au deuxième espace d'évacuation (14) et au quatrième espace d'évacuation dans une première zone de position mixte,
• plus ou moins tant au premier espace d'évacuation (13) qu'au troisième espace d'évacuation (15) et au quatrième espace d'évacuation dans une deuxième zone de position mixte,
• plus ou moins tant au deuxième espace d'évacuation (14) qu'au troisième espace d'évacuation (15) dans une troisième zone de position mixte.

4. Système de répartition d'air selon la revendication 2 ou 3, **caractérisé en ce que** le premier espace d'évacuation (13) et le quatrième espace d'évacuation sont reliés de manière communicante entre eux en dehors de l'organe distributeur (9).

5. Système de répartition d'air selon l'une quelconque des revendications 1 à 4, **caractérisé en ce que** l'organe distributeur (9) est conçu comme un corps en coque en forme de creuset d'un seul tenant.

6. Système de répartition d'air selon l'une quelconque des revendications 1 à 4, **caractérisé en ce que** l'organe distributeur (9) présente une coque intérieure en forme de creuset (28) autoporteuse qui porte de manière radiale à l'extérieur une coque extérieure en forme de douille (29) en mousse synthétique, les orifices de sortie (17, 19) de l'organe distributeur (9) étant réalisés sur les deux coques (28, 29).

7. Système de répartition d'air selon l'une quelconque des revendications 1 à 4, **caractérisé en ce que** l'organe distributeur (9) comporte une cage autoporteuse (31) réalisée de manière à être radialement perméable à l'air et portant radialement à l'extérieur une coque extérieure en forme de douille (35) sur laquelle les orifices de sortie (17, 19) de l'organe distributeur (9) sont réalisés.

8. Système de répartition d'air selon l'une quelconque des revendications 1 à 7, **caractérisé en ce que** l'organe distributeur (9) présente radialement à l'extérieur au moins une lèvre d'étanchéité (41) qui tourne fermée en forme d'anneau dans le sens de la circonférence et interagit avec un boîtier (2) dans lequel l'organe distributeur (9) est logé et qui abrite l'espace d'afflux (3) et les espaces d'évacuation (13, 14, 15).

9. Système de répartition d'air selon l'une quelconque des revendications 1 à 8, **caractérisé en ce que** l'organe distributeur (9) est relié de manière à résister à la torsion à un arbre d'entraînement (21) qui est logé de manière coaxiale par rapport à l'axe de rotation (10) de l'organe distributeur (9) et de manière à pouvoir tourner dans un boîtier (2) qui abrite l'espace d'afflux (3) et les espaces d'évacuation (13, 14, 15).

10. Système de répartition d'air selon la revendication 9, **caractérisé en ce qu'**un entraîneur (22, 40) relié à l'arbre d'entraînement (21) de manière à résister à la torsion est placé sur l'organe distributeur (9) de manière à résister à la torsion.

11. Système de répartition d'air selon la revendication 9 ou 10, **caractérisé en ce que** l'organe distributeur (9) est conçu en forme de creuset et comporte un fond (12) placé en face de l'orifice d'entrée axial (11), qui est relié à l'arbre d'entraînement (21) de manière à résister à la torsion.

12. Système de répartition d'air selon les revendications 10 et 11, **caractérisé en ce que** l'entraîneur (22) est composé de deux éléments d'entraîneur (23, 24) complémentaires pouvant être clipsés l'un à l'autre qui, pour être reliés à l'organe distributeur (9) de manière à résister à la torsion, fixent le fond (12) de l'organe distributeur (9) de manière axiale entre eux lors du clipsage.
